# EUROPÄISCHE PATENTSCHRIFT

(11) **EP 0 771 596 B1**
(45) Veröffentlichungstag und Bekanntmachung des Hinweises auf die Patenterteilung: **26.07.2000**
(21) Anmeldenummer: 96116647.7
(22) Anmeldetag: 17.10.1996
(51) Int. Cl.: B21B 1/46, B21B 1/26

(54) **Produktionsanlage zum kontinuierlichen- oder diskontinuierlichen Auswalzen von Warmband**
Installation for rolling hot strip by continuous or discontinuous rolling
Installation pour laminer à chaud des bandes en continu ou en discontinu

(30) Priorität: 03.11.1995 DE 19540978
(43) Veröffentlichungstag der Anmeldung: 07.05.1997
(73) Patentinhaber: SMS Demag AG, 40237 Düsseldorf (DE)
(72) Erfinder: Bald, Wilfried, 57271 Hilchenbach (DE); Rosenthal, Dieter, 57572 Niederfischbach (DE)
(74) Vertreter: Valentin, Ekkehard, Dipl.-Ing.

(56) Entgegenhaltungen:
- EP-A- 0 611 610
- WO-A-89/11363
- WO-A-92/08557
- DE-A- 4 402 402
- US-A- 3 918 282
- PATENT ABSTRACTS OF JAPAN vol. 005, no. 166 (M-093), 23.Oktober 1981 & JP-A-56 091906 (SUMITOMO METAL IND LTD), 25.Juli 1981,
- STAHL UND EISEN, Nr. 14/15, 24.Juli 1989, Seiten 51-55, XP000072146 "STRANGGIESSEN VON DUNNBRAMMEN"

## Beschreibung

Die Erfindung betrifft eine Produktionsanlage zum Auswalzen von Warmband aus, durch Stranggußeinrichtungen hergestellten Brammen, bei der hinter einer Stranggußeinrichtung und nachgeordnetem Ausgleichsofen Walzgerüst-Gruppen mit vor bzw. hinter diesen angeordneten Scheren, Entzunderungsvorrichtungen, Heiz- bzw. Kühleinrichtungen sowie, zwischen den einzelnen Walzgerüsten der Walzgerüstgruppen angeordnete Heiz- bzw. Kühleinrichtungen vorgesehen sind.

Bekannt gewordene Produktionsanlagen dieser Art sind unter anderem in der EP 226 446 beschrieben, die in einer Reihe von Ausführungsbeispielen hintereinander angeordnete ein-, zwei- und mehrgerüstige Walzgerüstanordnungen vorschlägt, in denen das aus der Stranggußeinrichtung kommende Walzgut mit einer Dicke von etwa 50 mm stufenweise vom A3 Umwandlungspunkt unter Anwendung von Ölsprühgeräten zwischen den einzelnen Walzgerüsten mit Walzgeschwindigkeiten bis zu 1500 m/min auf 300 °C heruntergewalzt wird und weiter in der DE 4 402 402, nach der das in einem Ofen vorgewärmte Band in einer mehrgerüstigen Walzgerüstanordnung auf eine Dicke von etwa 2 mm heruntergewalzt wird, wobei mindestens zwischen den beiden ersten Gruppen der Walzgerüst-Gruppen regelbare Induktionsheizungen vorgesehen sind, sowie in der PCT-WO 92/08 557, nach der das aus der Stranggußeinrichtung kommende, zunächst in einem Planeten-Walzwerk auf etwa 4 mm Dicke reduzierte Walzband anschließend in einer mehrgerüstigen Walzgerüstanordnung, mit zwischen deren Gerüsten angeordneten Heizeinrichtungen fertig gewalzt wird.

### Produktionsanlage zum kontinuierlichen Auswalzen von Warmband

Solche Produktionsanlagen zur Erzeugung warmgewalzter Bänder werden heute im allgemeinen so ausgelegt und betrieben, daß die Umformung in den einzelnen Gerüsten austenitisch erfolgt. Das heißt, es wird sichergestellt, daß die Walztemperaturen in den einzelnen Walzgerüsten oberhalb der GOS-Linie des Eisenkohlenstoffdiagramms liegen. Erst nach dem letzten Walzstich, der zur Erzielung eines feinkörnigen Endgefüges möglichst nahe an der GOS-Linie liegen sollte, erfolgt die Abkühlung auf die Haspeltemperatur mit Gefügeumwandlung in der Kühlstrecke bzw. im gewickelten Bund.

Für Stähle mit einem Kohlenstoffgehalt von weniger als 0,2% liegt für die Walzung mit den oben beschriebenen Produktionsanlagen die Endwalztemperatur, also die Temperatur im letzten Walzgerüst der Walzstraße je nach Höhe des Kohlenstoffgehalts bei 840 bis 920°C. Die Einhaltung der Endwalztemperatur erfolgt durch Wahl der Endwalzgeschwindigkeit.

Für Banddicken oberhalb einer Mindestbanddicke, die je nach Straßentyp in der Größenordnung von ca. 1,3 mm liegt, ist dieses Verfahren problemlos anwendbar. Wird diese Banddicke jedoch unterschritten, dann erreicht die erforderliche Walzgeschwindigkeit mit Werten oberhalb von 12 m/sec einen Bereich, der im freien Auslauf auf dem Rollgang hinter der Walzstraße bei diskontinuierlichem Betrieb nicht mehr beherrscht werden kann.

Die ungeachtet dieser Problematik vorhandene Entwicklungstendenz in Richtung geringerer Enddicken der Bänder hat dazu geführt, daß nach Wegen gesucht wurde, die Endwalztemperatur abzusenken, um damit geringere Walzgeschwindigkeiten zu ermöglichen. Solche Walzprozesse wurden unter der Bezeichnung ferritisches Walzen bekannt, da sie bei Temperaturen unterhalb der GOS-Linie erfolgen, nämlich im Bereich der Alpha-Gamma-Mischkristalle oder unterhalb der GOS-Linie im ferritischen Bereich.

Ein Verfahren sieht eine Vorwalzung im austenitischen Bereich bis auf eine Zwischendicke unterhalb 15 mm und eine Fertigwalzung im ferritischen Bereich auf geringste Enddicken unterhalb von 1,3 mm vor. Zwischen den beiden Prozeßstufen muß das Walzgut von der Endwalztemperatur im austenitischen Bereich auf die Walztemperatur im ferritischen Bereich abgekühlt werden. Dies bedeutet eine Abkühlung aus dem Temperaturbereich von 840 bis 920°C auf den Temperaturbereich von 600 bis 780°C.

Die Endwalztemperatur hinter der zweiten Verformungsstufe liegt ebenfalls im Bereich von 600 bis 780°C und damit in einer Größenordnung, bei der nach dem Aufhaspeln eine Rekristallisation des Gefüges im gewickelten Band eintritt. Es entsteht ein Gefüge, welches die Verwendung des Produktes ohne weitere Kaltumformung oder Wärmebehandlung ermöglicht.

Wesentliche Voraussetzung für ein gutes Ergebnis ist die Einhaltung einer Mindestkühlzeit für die Abkühlung aus dem austenitischen Gebiet in das ferritische Gebiet. Damit die Umwandlung von Austenit in Ferrit in ausreichendem Maße erfolgen kann, muß diese Mindestkühlzeit eingehalten werden.

Die Realisierung des eben beschriebenen Prozesses bereitet in einer konventionell gestalteten Warmbreitbandstraße erhebliche Schwierigkeiten. Der Übergang von der austenitischen in die ferritische Umformung soll im Dickenbereich kleiner 15 mm vorgenommen werden, also in einem Dickenbereich, bei dem sich das Walzgut etwa in Mitte einer konventionellen Fertigstraße befindet. Da die Durchlaufzeit von Gerüst zu Gerüst an dieser Stelle nur wenige Sekunden beträgt, ist eine Realisierung der Kühlung zwar prinzipiell möglich. Die Einhaltung der geforderten Zeit für die Umwandlung kann jedoch nicht realisiert werden. Die Durchführung des ferritischen Walzens nach der beschriebenen Methode wird damit für die konventionell gestaltete Warmbreitbandstraße unmöglich.

Damit unter erwünschter Begrenzung der Auslaufgeschwindigkeit ein wählbarer Teil der Reduktion des Bandes im ferritischen Bereich erfolgen kann, wurde deshalb nach einer nicht vorveröffentlichten Patentanmeldung eine Produktionsanlage für das Walzen von Warmband vorgeschlagen, bei der mindestens das erste Gerüst der Walzstraße als Reversiergerüst ausgebildet ist, dem mindestens je ein Haspelofen vor- und nachgeordnet sind, wobei zwischen dem vorgesetzten Haspelofen und dem folgenden Reversiergerüst eine steuerbare Kühlvorrichtung vorgesehen ist.

Diese Produktionsanlage kann, wie herkömmliche Anlagen, im austenitischen Bereich betrieben werden. Das von einer Vorstraße bzw. Dünnbrammengießmaschine gelieferte Walzgut, welches eine Dicke von ca. 50 mm aufweist, wird dazu in einem Ofen auf etwa 1100°C temperiert und der aus einem oder mehreren Gerüsten bestehenden Reversierstraße (Steckelstraße) durch Anstellen von einem oder mehreren Gerüsten gewalzt sowie in dem sich an die Steckelstraße anschließenden Steckel- bzw. Haspelofen aufgewickelt. Nach dem Reversieren der Steckelstraße wird das Band vom Steckelofen abgezogen und in einem oder mehreren Gerüsten der Steckelstraße auf etwa 10 mm Dicke heruntergewalzt sowie anschließend dem eingangsseitigen Steckelofen aufgewickelt. Die Temperatur des Bandes liegt in diesem Bereich noch immer über 850°C. Nunmehr wird das Band vom eingangsseitigen Stekkelofen abgewickelt und in den Steckelgerüsten sowie dem Rest der Walzstraße auf eine Dicke von etwa 1 mm heruntergewalzt und von der Wickelmaschine aufgewickelt. Vor dem Aufwickeln des Walzbandes in dem eingangsseitigen Steckelofen kann dabei eine Kühlvorrichtung vorgesehen werden, mittels der das etwa 10 mm dicke Band auf Temperaturen unter 850°C gekühlt wird. Nach der ferritischen Umwandlung kann das Band in der Steckelstraße und dem Rest der Walzstraße zu einem Band mit einer Stärke von etwa 1 mm heruntergewalzt werden, dessen Verwendung dann ohne weitere Kaltumformung oder Wärmebehandlung möglich ist.

Die Walzung von Warmbandprodukten auf im Reversierbetrieb arbeitenden Steckelstraßen und mit zugehörigen Steckel- bzw. Haspelöfen ist unproblematisch. Die Aufgabe der Erfindung besteht darin, eine weitere Produktionsanlage zum kontinuierlichen oder diskontinuierlichen Auswalzen von Warmband mit austenitischem oder ferritischem Gefüge anzugeben.

Diese Aufgabe wird durch die in den Patentansprüchen angegebene Anlage gelöst.

Mit dem ersten Anlagenabschnitt ist es möglich, Warmband mit austenitischem Gefüge und einer Dicke von etwa 2,5 mm bis 12 mm voll kontinuierlich herzustellen.

Mit dem zweiten - Anlagenabschnitt läßt sich das aus dem vorhergehenden - ersten - Anlagenabschnitt kommende Warmband auf eine Dicke zwischen 0,5 mm und 2,0 mm mit austenitischem oder ferritischem Gefüge voll kontinuierlich herunterwalzen, weil es möglich ist, das Warmband mit den Kühl- und Heizvorrichtungen zwischen den beiden Walzgerüstgruppen und ggf. auch den Behandlungsvorrichtungen zwischen den Gerüsten der zweiten Walzgerüstgruppe auf die richtige Temperatur einzustellen.

Mit dem dritten Anlagenabschnitt lässt sich zusammen mit den vorhergehenden ersten und zweiten Anlagenabschnitten, das ankommende Warmband mit einem austenitischen Gefüge sowie mit einer Dicke > 1 mm voll kontinuierlich mit Hilfe der beiden Walzgerüstgruppen auswalzen, und zwar dadurch, daß zumindest zwischen den beiden ersten und zweiten Anlagenabschnitten eine Wärmezufuhr und ggf. zusätzlich auch zwischen den Gerüsten der ersten und zweiten Walzgerüstgruppe eine zusätzliche Wärmezufuhr vorgenommen wird.

Während die Scheren vor und hinter dem Ausgleichsofen diesem kontinuierlichen Betrieb nur zum Einsatz gelangen, wenn in irgendeiner Walzgerüstgruppe der Walzstraße eine Störung eintritt, arbeitet jede der weiteren in der Walzstraße vorhandenen Scheren jeweils nur mit den ihnen unmittelbar nachgeordneten als Doppelhaspel ausgebildeten Bandwickeleinrichtungen im kontinuierlichen Betrieb zusammen.

Das Weiterbildungsmerkmal der Erfindung schafft, die Möglichkeit, jeweils an einem beliebigen Walzgerüst jeder Walzgerüst-gruppe "inline" Wartungsarbeiten vorzunehmen, bspw. einen Arbeitswalzenwechsel durchzuführen, während die übrigen Walzgerüste in voll kontinuierlichem Betrieb die Umformarbeit leisten.

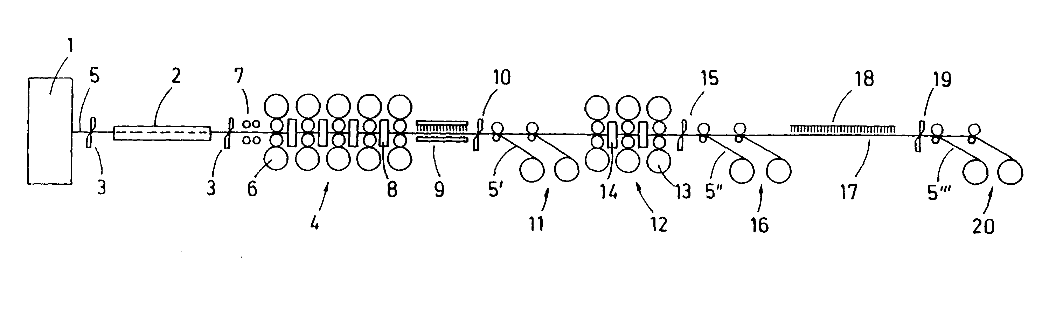

In der Zeichnung ist die erfindungsgemäße Produktionsanlage in schematischer Darstellung wiedergegeben.

Diese Produktionsanlage hat als Stranggießanlage eine Gießmaschine 1, die für eine Gießgeschwindigkeit von etwa 3 m/min bis 18 m/min ausgelegt ist. Dieser ist ein Ausgleichsofen 2 nachgeordnet, vor und hinter dem sich jeweils eine Schere 3 befindet. Diese beiden Scheren 3 gelangen beim kontinuierlichen Betrieb nur dann zum Einsatz, wenn die dem Ausgleichsofen 2 nachgeschaltete Walzstraße eine Störung hat.

Zwischen dem Ausgleichsofen 2 und der Walzgerüstgruppe 4 des ersten Anlagenabschnitts zum Vorwalzen der Brammen 5 ist eine Entzunderungsvorrichtung 7 angeordnet.

Die Walzgerüstgruppe 4 umfaßt fünf, Quarto-Gerüste 6, die für einen kontinuierlichen Walzbetrieb ausgelegt sind.

Jeweils zwischen den aufeinanderfolgenden Quarto-Gerüsten 6 der Walzgerüstgruppe 4 ist eine Heizvorrichtung 8 angeordnet, d. h. im gezeigten Fall befinden sich zwischen den fünf Quarto-Gerüsten 6 vier Heizvorrichtungen 8, um das der Walzung unterworfene Band auf der richtigen Walztemperatur zu halten.

An die Stelle oder zu den vorerwähnten einzelnen Heizvorrichtungen 8 kann je eine Kühlvorrichtung treten.

Hinter der ersten Walzgerüstgruppe 4 ist eine Heizvorrichtung oder Kühlvorrichtung 9 aufgebaut und dahinter eine Schere 10 vorgesehen.

Hinter der Schere 10 befindet sich ein Doppelhaspel 11, welcher den Abschluß eines ersten Anlagenabschnitts der Produktionsanlage bildet. Dieser erste Anlagenabschnitt der Produktionsanlage ist geeignet, Warmband 5' mit austenitischem Gefüge sowie einer Dicke von etwa 2,5 mm vollkontinuierlich auszuwalzen.

An den vorstehend beschriebenen, ersten Anlagenabschnitt schließt sich ein zweiter Anlagenabschnitt an. Dieser weist eine zweite Walzgerüstgruppe 12 mit drei Quarto-Fertiggerüsten 13 auf, wobei jeweils zwischen zwei aufeinanderfolgenden Fertiggerüsten 13 einzelne Heiz- oder Kühlvorrichtungen 14, im vorliegenden Fall also zwei Heiz- oder Kühlvorrichtungen 14, angeordnet sind.

Hinter der zweiten Walzgerüstgruppe 12 mit Quarto-Fertiggerüsten 13 sowie Heiz- und Kühlvorrichtungen 14 befindet sich eine Schere 15 zum Teilen der Bänder bei kontinuierlichem Betrieb und den Abschluß des zweiten Anlagenabschnitts bildet ein Doppelhaspel 16.

Der zweite Anlagenabschnitt macht es möglich, Warmband 5'' mit einem austenitischen oder ferritschen Gefüge und einer Dicke zwischen 0,5 mm und 2,0 mm voll kontinuierlich auszuwalzen. Hierzu ist Voraussetzung, daß auf das vom ersten Anlagenabschnitt kommende, durch die offene Schere 10 und über den Doppelhaspel 11 hinweglaufende Warmband 5' die Kühl- und Heizvorrichtung 9 zwischen der ersten Walzgerüstgruppe 4 und der zweiten Walzgerüstgruppe 12 sowie ggf. auch die Kühl- und Heizvorrichtungen 14 zwischen den Quarto-Fertiggerüsten 13 der zweiten Walzgerüstgruppe 12 einwirken, um es im richtigen Gefügebereich auszuwalzen.

Das ein austenitisches oder ferritisches Gefüge aufweisende Warmband 5'' wird vom Doppelhaspel 16 aufgenommen und von der Schere 15 unterteilt.

Dem zweiten Anlagenabschnitt der Produktionsanlage folgt noch ein dritter Anlagenabschnitt. Dieser besteht aus einem Rollgangsabschnitt 17 und einer Laminarkühlung 18, welche der zweiten Walzgerüstgruppe 12 hinter dem Doppelhaspel 16 nachgeordnet sind.

Der Laminarkühlung 18 folgt eine Schere 19 und dieser wiederum ein Doppelhaspel 20.

Mit dem dritten Anlagenteil läßt sich Warmband 5''' mit einem austenitischen Gefüge und einer Dicke < 2 mm voll kontinuierlich herstellen. Hierzu wird es kontinuierlich in der ersten Walzgerüst-gruppe 4 und kontinuierlich in der zweiten Walzgerüstgruppe 12 gewalzt.

Wenn alle drei Anlagenteile der Produktionsanlage in Betrieb stehen, findet ein kontinuierlicher Durchlauf der von der Dünnbrammengießmaschine 1 gelieferten Dünnbrammen 5 durch die Gesamtanlage statt und das fertige Warmband 5''' wird vom Doppelhaspel 20 aufgenommen, während nur die Schere 19 arbeitet, alle übrigen Scheren 3, 10 und 15 jedoch außer Betrieb sind und sich in Offenstellung befinden.

Sowohl in der ersten Walzgerüstgruppe 4, als auch in der zweiten Walzgerüstgruppe 12 ist die Anzahl der Einzelgerüste 6 bzw. 13 so gewählt, daß sie mindestens um eins größer ist, als die für die, in der betreffenden Walzgerüstgruppe 4 bzw. 12 zu leistende Verformungsarbeit nötige Gerüstanzahl. Dies schafft die Möglichkeit, daß jeweils ein beliebiges Quarto-Gerüst 6 bzw. Quarto-Fertiggerüst 13 "inline" gewartet werden kann, bspw. der Arbeitswalzenwechsel ermöglicht wird, während die übrigen Quarto-Gerüste 6 bzw. Quarto-Fertiggerüste 13 in vollkontinuierlichem Betrieb die Umformarbeit leisten.

### Liste der Bezugszeichen

- 1.: Stranggießanlage/Dünnbrammengießmaschine
- 2.: Ausgleichsofen
- 3.: Scheren
- 4.: Erste Walzgerüstgruppe
- 5.: Bramme
- 6.: Quarto-Gerüst
- 7.: Entzunderungsvorrichtung
- 8.: Heizvorrichtung
- 9.: Heiz- oder Kühlvorrichtung
- 10.: Schere für kontinuierlichen Betrieb
- 11.: Doppelhaspel
- 12.: Zweite Walzgerüstgruppe
- 13.: Quarto-Fertiggerüst
- 14.: Heiz- oder Kühlvorrichtung
- 15.: Schere für kontinuierlichen Betrieb
- 16.: Doppelhaspel
- 17.: Rollgangsabschnitt
- 18.: Laminarkühlung
- 19.: Schere für kontinuierlichen Betrieb
- 20.: Doppelhaspel

## Patentansprüche

1. Produktionsanlage zum Auswalzen von Warmband aus, durch Stranggußeinrichtungen hergestellten Brammen, bei der hinter einer Stranggußeinrichtung (1) und nachgeordnetem Ausgleichsofen (2) Walzgerüst-Gruppen (4; 12) mit vor bzw. hinter diesen angeordneten Scheren (3; 10; 15; 19), Entzunderungsvorrichtungen (7), Heiz- bzw. Kühleinrichtungen (9; 18) sowie, zwischen den einzelnen Walzgerüsten der Walzgerüst-Gruppen (4; 12) angeordnete Heiz- bzw. Kühleinrichtungen (8; 14) vorgesehen sind,
**gekennzeichnet durch,**
drei aufeinander folgende Anlagenabschnitte, von denen der erste eine, aus fünf Quarto-Walzgerüsten (6) oder mehr bestehende Walzgerüst-Gruppe (4) mit, zwischen allen Gerüsten angeordneten Heiz-Kühleinrichtungen (8) und eine, der Gruppe (4) nachgeordnete Heiz-Kühlvorrichtung (9) und eine Bandwickeleinrichtung (11) aufweist in dem das zugeführte Walzband (5) mit austenitischen Gefüge auf eine Dicke von etwa 2,5 mm gewalzt wird, und der zweite Anlagenabschnitt eine, aus drei oder mehr Fertigwalzgerüsten (13) bestehende Walzgerüstgruppe (12) ebenfalls mit zwischen allen Gerüsten angeordneten Heiz-Kühlelementen (14) und nachgeordneter Bandwickeleinrichtung (16) aufweist, in der das, aus der vorgeordneten Walzgerüst-Gruppe (4) kontinuierlich zugeführte Walzband (5') zu einem Walzband (5") mit austenitischen oder ferritischen Gefüge und einer Dicke zwischen 0,5 und 2,0 mm gewalzt wird und der dritte Anlagenabschnitt einen Rollgang (17) mit Laminarkühlung (18) und nachgeordneter Bandwickeleinrichtung (20) aufweist, in der das, aus der vorgeordneten Walzgerüst-Gruppe (12) kontinuierlich zugeführte Walzband (5") als Walzband (5"') mit austenitischen Gefüge geteilt und gewickelt wird.

2. Produktionsanlage nach Anspruch 1,
**dadurch gekennzeichnet,**
daß die Bundwickeleinrichtungen (11, 16, 20) als wechselweise betreibbare Doppelhaspel ausgebildet sind.

3. Produktionsanlage nach Anspruch 1,
**dadurch gekennzeichnet,**
daß die Zahl, der in den Walzgerüsten (4; 12) enthaltenen einzelnen Walzgerüste jeweils mindestens um 1 größer ist als die, für die maximal zu leistende Verformungsarbeit notwendige Gerüstzahl in diesen Walzgerüst-Gruppen.

## Claims

1. Production plant for rolling hot strip from slabs produced by continuous casting equipment, in which roll stand groups (4; 12) with cutters (3; 10; 15; 19) arranged in front of and behind these, descaling devices (7), heating and cooling devices (9; 18) as well as heating and cooling devices (8; 14) arranged between the individual roll stands of the roll stand groups (4; 12) are provided behind a continuous casting equipment (1) and downstream compensating oven (2), characterised by three successive plant sections, of which the first comprises a roll stand group (4) consisting of five or more four-high roll stands (6) and with heating/cooling devices (8) arranged between all stands, a heating/cooling device (9) arranged downstream of the group (4) and a strip winding device (11), in which the supplied roll strip (5) with austenitic structure is rolled to a thickness of about 2.5 mm, the second plant section comprises a roll stand group (12) consisting of three or more finishing roll stands (13) and similarly with heating/cooling devices (14) arranged between all stands and a downstream strip winding device (16), in which the roll strip (5') continuously fed from the upstream roll stand group (4) is rolled into a roll strip (5") with austenitic or ferrite structure and a thickness of between 0.5 and 2.0 mm, and the third plant section comprises a roller path (17) with a laminar cooling device (18) and a downstream strip winding device (20), in which the roll strip (5") continuously fed from the upstream roll stand group (12) is divided and wound up as roll strip (5") with austenitic structure.

2. Production plant according to claim 1, characterised in that the coil winding devices (11, 16, 20) are constructed as double winders operable in alternation.

3. Production plant according to claim 1, characterised in that the number of individual roll stands contained in the roll stands (4; 12) is each time greater by at least one than the stand member, which is needed for the maximum shaping working to be performed, in these roll stands.

## Revendications

1. Installation pour laminer à chaud des bandes à partir de brames produites dans des installations de coulée continue, dans laquelle on a prévu, en aval d'une installation de coulée continue (1) et un four de compensation (2) disposé en aval, des groupes (4 ; 12) de cages de laminage avec des cisailles (3 ; 10 ; 15 ; 19) disposées en amont et en aval de ceux-ci, des dispositifs de décalaminage (7), des installations de chauffage et de refroidissement (9 ; 8) ainsi que, entre les différentes cages de laminage des groupes (4 ; 12) de cages de laminage, des dispositifs de chauffage et de refroidissement (8 ; 14), caractérisée par trois sections d'installation successives, dont la première est constituée par un groupe (4) de cinq cages de laminage quarto (6) ou plus, comprenant des dispositifs de chauffage et de refroidissement (8) disposés entre toutes les cages, et un dispositif de chauffage et de refroidissement (9) disposé derrière le groupe (4) ainsi qu'un dispositif de bobinage (11) de la bande, dans laquelle la bande laminée alimentée (5) avec une structure austénitique est laminée à une épaisseur d'environ 2,5 mm, dont la deuxième section est constituée par un groupe (12) de cages de laminage constitué par trois cages finisseuses (13) ou plus, présentant également des éléments de chauffage et de refroidissement (14) disposés entre toutes les cages et un dispositif de bobinage de la bande (16) disposé en aval, dans laquelle la bande laminée (5') alimentée en continu provenant du groupe (4) de cages de laminage en amont est laminée, en une bande laminée (5") avec une structure austénitique ou ferritique et une épaisseur entre 0,5 et 2,0 mm, et dont la troisième section présente une ligne de rouleaux (17) avec un refroidissement laminaire (18) et un dispositif de bobinage (20) de la bande disposé en aval, dans laquelle la bande laminée (5") alimentée en continu provenant du groupe (12) de cage de laminage en amont est divisée et bobinée sous forme d'une bande laminée (5"') avec une structure austénitique.

2. Installation de production selon la revendication 1, caractérisée en ce que les dispositifs de bobinage (11, 16, 20) de la bande sont exécutés sous forme de mandrins doubles pouvant fonctionner alternativement.

3. Installation de production selon la revendication 1, caractérisée en ce que le nombre de cages de laminage contenues dans les groupes (4 ; 12) de cages de laminage est supérieur d'au moins une unité au nombre nécessaire de cages pour le travail de déformation maximal à atteindre dans ces groupes de cages.
